# EUROPEAN PATENT SPECIFICATION

(11) **EP 2 937 514 B1**
(45) Date of publication and mention of the grant of the patent: **27.05.2020**
(21) Application number: 15164233.7
(22) Date of filing: 20.04.2015
(51) Int. Cl.: F01D 5/28, C23C 28/00, F01D 5/20

(54) **GAS TURBINE ENGINE TURBINE BLADE TIP WITH COATED RECESS**
GASTURBINENMOTOR-TURBINENSCHAUFELSPITZE MIT BESCHICHTETER AUSSPARUNG
POINTE D'AUBE DE TURBINE DE MOTEUR À TURBINE À GAZ AVEC ÉVIDEMENT REVÊTU

(30) Priority: 22.04.2014 US 201461982380 P
(43) Date of publication of application: 28.10.2015
(73) Proprietor: United Technologies Corporation, Farmington, CT 06032 (US)
(72) Inventor: CANDELORI, David J., Glastonbury, CT Connecticut 06033 (US); QUACH, San, East Hartford, CT Connecticut 06108 (US)
(74) Representative: Dehns

(56) References cited:
- EP-A1- 0 684 364
- EP-A2- 1 057 972
- EP-A2- 1 764 478
- EP-A2- 1 930 547
- GB-A- 2 158 160
- US-A1- 2003 082 297
- US-A1- 2004 197 190
- US-A1- 2008 044 289
- US-A1- 2009 129 934
- US-A1- 2010 111 704
- US-A1- 2013 243 596
- US-B1- 8 303 254

## Description

### BACKGROUND

This disclosure relates to a gas turbine engine, and more particularly to turbine blade tip cooling arrangements that may be incorporated into a gas turbine engine.

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

Turbine airfoils operate in gaspath environments that exceed blade material's melting temperatures. This generally results in erosion and oxidation at the tip, which penalizes the turbine efficiency, since there is more leakage air past the tip.

Several techniques have been used to reduce airfoil tip temperatures. One approach has been to provide a large airfoil tip shelf that runs chordwise on the pressure side of the tip. The shelf has cooling holes in fluid communication with an interiorly located cooling passage. Another approach is to provide a squealer pocket in the tip. The squealer pocket typically is recessed into the tip 50 to 100 mils (1.27 to 2.54 mm) and includes cooling holes in fluid communication with an interiorly located cooling passage. The pocket of cooling air reduces the heat transfer coefficient within the pocket, and has a shield of cooled air.

These tip patterns, particularly shelves, undesirably change the tip aerodynamic shape, and may reduce blade aerodynamic efficiency.

EP 1 057 972 A2 discloses an airfoil having a pressure sidewall and a suction sidewall defining an outer periphery and a tip portion having a tip cap (30). An offset squealer is disposed on the tip cap, the offset squealer being positioned inward from the outer periphery of the rotating blade.

US 8 303 254 B1 discloses a turbine blade having a squealer tip rail forming a squealer pocket on the blade tip, and a row of blade tip peripheral film cooling holes on the pressure side and suction side of the blade for cooling the blade tip rails. A thermal barrier coating is applied to the pressure side and suction side walls of the blade up to the row of tip peripheral film cooling holes, leaving these surfaces uncovered.

EP 0 684 364 A1 discloses a gas turbine hollow cooled rotor blade in which a plurality of cooling holes are provided which communicate between a cooling air passage in the blade and the tip squealer portion on the pressure side and between the cooling air passage in the blade and a position in the vicinity of the suction side of a tip cap.

EP 1 930 547 A2 discloses a rotor blade having a suction side made convex and a pressure side made concave so as to have an aerofoil profile. A squealer tip having a back face continuous to the suction side and a front face matching with a center plane of the blade is formed as a distal end of the blade. The front face is coated with a hard coating.

US 2003/082297 A1 discloses a method of repairing the tip region of combustion turbine engine blades. The method includes application of a thermal barrier coating after stripping of the bond coat.

US 2013/243596 A1 discloses an airfoil having a tip shelf. The tip shelf is formed along the tip section, and includes a triangular pocket.

US 2009/129934 A1 discloses a turbine blade including a camber-line rib extending radially outward from a tip of the blade and extending from a trailing edge of the blade toward a leading edge. The camber-line rib may form pressure and suction side cooling slots at the tip of the blade.

US 2008/044289 A1 discloses a turbine blade which includes first and second tip ribs extending from a tip floor to define a tip cavity.

### SUMMARY

In one exemplary embodiment, a blade for a gas turbine engine comprising: an airfoil having a tip with a terminal end surface, the airfoil includes pressure and suction sides joined at leading and trailing edges, the pressure and suction sides terminating at the terminal end surface, the terminal end surface includes a recess arranged radially inward of the terminal end surface having a depth of less than 40 mils (1.016 mm), the recess being without any cooling holes; characterised in that the recess is completely filled with a thermal barrier coating; and in that the thermal barrier coating forms a planar surface which is flush with the terminal end surface.

The recess may be located near a leading edge of the airfoil.

The recess may be located near a trailing edge of the airfoil.

The recess may extend to at least one of the pressure and suction sides.

The recess may extend to at least one of the leading and trailing edges.

The recess may be arranged inward of the pressure and suction sides.

The depth of the recess may be between 5 to 15 mils (0.127 to 0.381 mm).

The airfoil may include a cooling passage. The recess is in non-communication with and is fluidly isolated from the cooling passage.

The terminal end surface may include multiple recesses.

In another exemplary embodiment, a gas turbine engine includes compressor and turbine sections. One of the compressor and turbine sections includes a blade outer air seal and a blade as described above.

The present disclosure also provides a blade for a gas turbine engine comprising: an airfoil having a tip with a terminal end surface, the airfoil includes pressure and suction sides joined at leading and trailing edges, the pressure and suction sides terminating at the terminal end surface, the terminal end surface includes a recess arranged radially inward of the terminal end surface having a depth of less than 40 mils (1.016 mm), the recess being without any cooling holes, the terminal end surface having an edge formed between the recess and the terminal end surface; characterised in that the recess is completely filled with a thermal barrier coating; and in that the thermal barrier coating forms a planar surface which extends beyond the edge and coats at least a portion of the terminal end surface.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2A is a perspective view of the airfoil having the disclosed cooling passages.
Figure 2B is a plan view of the airfoil illustrating directional references.
Figure 2C is a cross-sectional view through the airfoil shown in Figure 2A.
Figure 3A is an enlarged perspective view of an airfoil tip with a coated recess.
Figure 3B is a cross-sectional view through the airfoil tip shown in Figure 3A.
Figure 4 is another example airfoil tip recess.
Figure 5 is yet another example airfoil tip recess.
Figure 6 is still another example airfoil tip recess.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

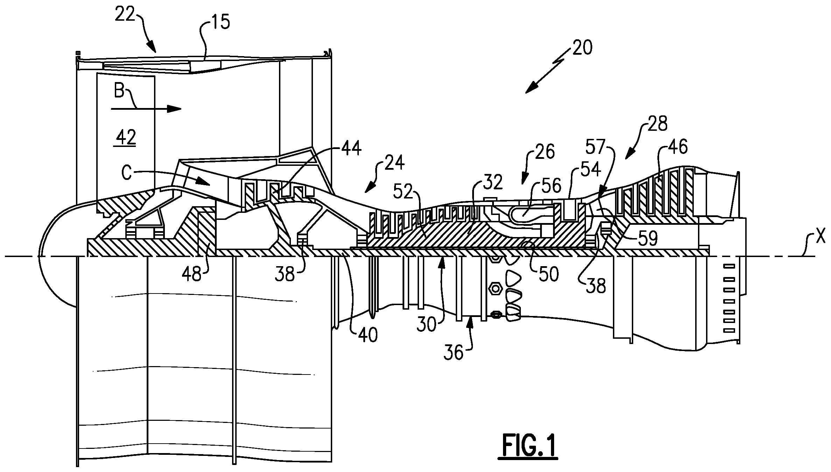

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. That is, the disclosed airfoils may be used for engine configurations such as, for example, direct fan drives, or two- or three-spool engines with a speed change mechanism coupling the fan with a compressor or a turbine sections.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicyclic gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

The example gas turbine engine includes the fan 42 that comprises in one non-limiting embodiment less than about twenty-six fan blades. In another non-limiting embodiment, the fan section 22 includes less than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.55. In another non-limiting embodiment the low fan pressure ratio is less than about 1.45. In another non-limiting embodiment the low fan pressure ratio is from 1.1 to 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1200 ft / second (365.7 meters/second).

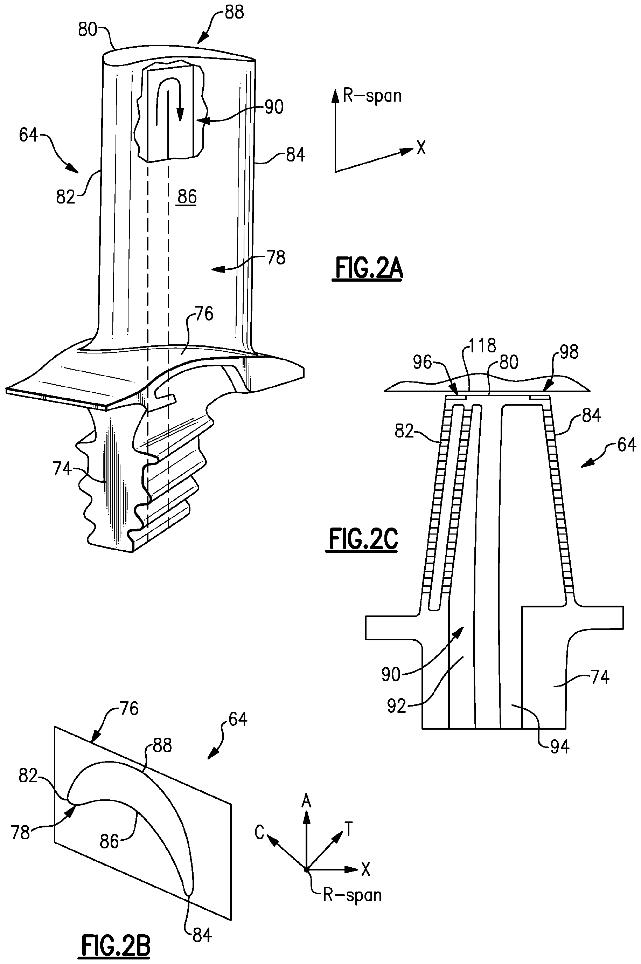

Referring to Figures 2A and 2B, a root 74 of each turbine blade 64 is mounted to the rotor disk. The blade 64 is formed from a material, such as a nickel based alloy, an iron-nickel based alloy, a cobalt based alloy, a molybdenum based alloy, or a niobium based alloy.

The turbine blade 64 includes a platform 76, which provides the inner flow path, supported by the root 74. An airfoil 78 extends in a radial direction R from the platform 76 to a tip 80. It should be understood that the turbine blades may be integrally formed with the rotor such that the roots are eliminated. In such a configuration, the platform is provided by the outer diameter of the rotor. The airfoil 78 provides leading and trailing edges 82, 84. The tip 80 is arranged adjacent to a blade outer air seal (not shown).

The airfoil 78 of Figure 2B somewhat schematically illustrates exterior airfoil surface extending in a chord-wise direction C from a leading edge 82 to a trailing edge 84. The airfoil 78 is provided between pressure (typically concave) and suction (typically convex) wall 86, 88 in an airfoil thickness direction T, which is generally perpendicular to the chord-wise direction C. Multiple turbine blades 64 are arranged circumferentially in a circumferential direction A. The airfoil 78 extends from the platform 76 in the radial direction R, or spanwise, to the tip 80.

The airfoil 78 includes a cooling passage 90 provided between the pressure and suction walls 86, 88. The exterior airfoil surface may include multiple film cooling holes (not shown) in fluid communication with the cooling passage 90. Cooling passage 90 is shown in Figure 2C as including first and second cooling passages 92, 94. It should be understood that multiple cooling passages with any configuration may be used.

The blade tip 80 is arranged adjacent to a blade outer air seal (BOAS) 118. The tip 80 includes first and second coated recesses 96, 98 arranged at hot spots along the tip 80. For example, the coated recesses 96, 98 may be arranged at or near the leading edge and/or trailing edge 82, 84. In one example, "near" means within 0-20% and 80-100% of the mean camber lines of the leading and trailing edges, respectively. The coated recesses 96, 98 are in non-communication with the fluidly isolated from the cooling passage 90. That is, the coated recesses do not receive a cooling fluid that would produce a boundary layer of cooling fluid. Rather, the tip relies upon a coating to provide a thermal boundary at the tip's hot spots.

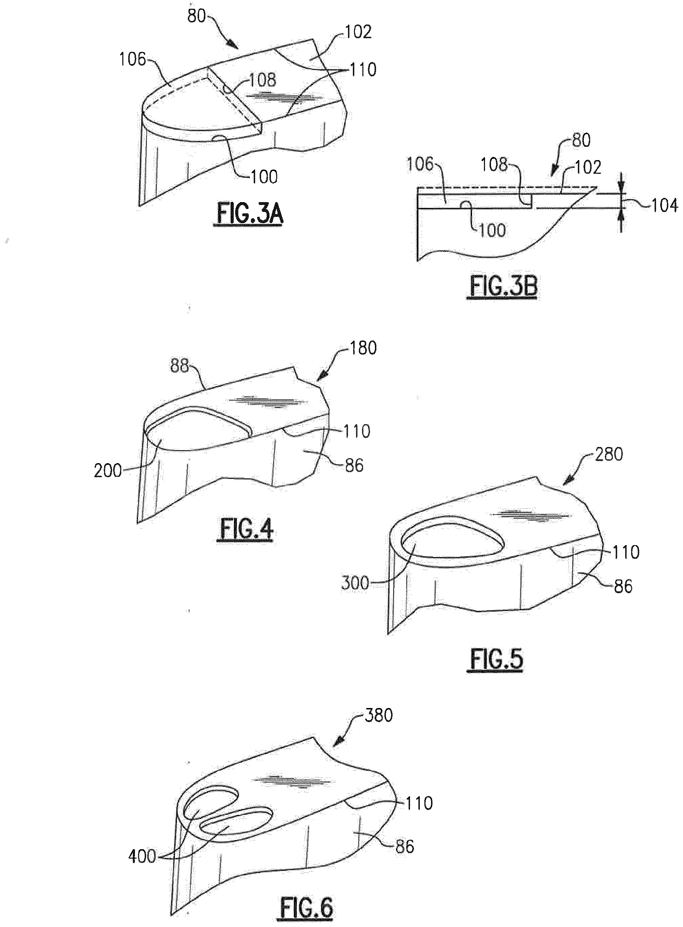

Referring to Figures 3A and 3B, a recess 100 is arranged radially inward of a terminal end surface 102 of the tip 80. The recess 100 extends a depth 104 of less than 40 mils (1.016 mm), and in one example between 5 to 15 mils (0.127 to 0.381 mm). The recess may be cast, produced additively along with the blade, machined, or electrodischarge machined.

There are no cooling holes in communication with the recess 100. This is contrasted with a typical squealer pocket that has holes connected to a depression in the tip that extends greater than 40 mils (1.016 mm), and typically between 50 to 100 mils (1.27 to 2.54 mm). The squealer pocket is supplied with cooling fluid from the cooling passages, which fills the pocket to provide a boundary layer of cooling fluid. The disclosed recess is much shallower than squealer pockets and does not rely on cooling fluid to provide thermal protection for the tip 80.

A thermal barrier coating (TBC) or TBC coating system (metallic bond coat and TBC) 106 is arranged in the recess 100. In one example, the TBC 106 is flush with and abuts an edge 108 of the terminal end surface 102. In this manner, the tip shape is maintained and the aerodynamic efficiency of the airfoil is not altered significantly. In another example, the TBC 106 may extend beyond the edge 108 and coat at least a portion of the terminal end surface 102, as schematically indicated by the upper dashed line in Figure 3B.

In the example shown in Figure 3A, the recess 100 extends to a perimeter tip edge 110 that circumscribes the terminal end surface 102. If desired, the recess may be arranged inboard of at least a portion of the perimeter tip edge 110. In the example shown in Figure 4, the recess 200 extends all the way to the perimeter tip edge 110 on the pressure side 86 of the tip 180. The recess 200 is shielded by a portion of the suction side 88, which better ensures that the TBC remains attached to the tip 80 during a rub event with the BOAS 118.

In the examples shown in Figures 5 and 6, the recess 300 and 400 of the respective tips 280, 380 are arranged inboard of the perimeter tip edge 110. Figure 6 illustrates multiple recesses 400 arranged in the tip 380, for example, adjacent to one another near the leading edge.

In one example, the TBC 106 is provided by yttria-stabilized zirconia (YSZ) and/or gadolinium zirconium oxide to reduce the temperature of blade tip. In the example, the TBC is applied without masking the blade.

If desired, a bond coat may be applied to the blade's substrate, and the TBC 106 applied to the bond coat. The bond coat may be applied using any suitable technique known in the art. The bond coat may be applied by low pressure plasma spray (LPPS), atmospheric plasma spray (APS), high velocity oxygen fuel (HVOF), high velocity air fuel (HVAF), physical vapor deposition (PVD), chemical vapor deposition (CVD) or cathodic arc, for example. Once the substrate surface is coated, the TBC 106 may be applied, for example, by using an electron beam physical vapor deposition (EBPVD) process, a suspension plasma spray (SPS), sputtering, sol gel, slurry, low pressure plasma spray (LPPS) or air plasma spray (APS), for example.

The TBC 106 may comprise one or more layers of a ceramic material such as an yttria stabilized zirconia material, a gadolinia stabilized zirconia material, cubic/fluorite/pyrochlore/delta phase fully stabilized zirconates where stabilizers are any oxide or mix of oxides including Lanthanide series, Y, Sc, Mg, Ca, or further modified with Ta, Nb, Ti, Hf. The thermal barrier coating may also be hafnia based. The yttria stabilized zirconia material may contain from 3.0 to 40 wt. % yttria and the balance zirconia. The gadolinia stabilized zirconia material may contain from 5.0 to 99.9 wt. % gadolinia, and in one example, 30 to 70 wt. % gadolinia and the balance zirconia.

The bond coat, if used, may be either a MCrAlY material (where M is nickel, iron and/or cobalt), an aluminide material, a platinum aluminide material, or a ceramic-based material. NiCoCrAlY bond coat and an yttria-stabilized zirconia (YSZ) thermal barrier coating may be used to provide the disclosed bond coat and TBC 106, for example. Of course, numerous other ceramic layers may be used. MCrAlY coatings also include MCrAlYX coatings, where X is at least one of a reactive element (Hf, Zr, Ce, La, Si) and/or refractory element (Ta, Re, W, Nb, Mo).

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A blade (64) for a gas turbine engine (20) comprising:
an airfoil (78) having a tip (80;180;280;380) with a terminal end surface (102), the airfoil (78) includes pressure and suction sides (86,88) joined at leading and trailing edges (82,84), the pressure and suction sides (86,88) terminating at the terminal end surface (102), the terminal end surface (102) includes a recess (100;200;300;400) arranged radially inward of the terminal end surface having a depth (104) of less than 1.016 mm (40 mils), the recess (100;200;300;400) being without any cooling holes;
**characterised in that** the recess (100;200;300;400) is completely filled with a thermal barrier coating (106); and
**in that** the thermal barrier coating (106) forms a planar surface which is flush with the terminal end surface (102).

2. The blade (64) according to claim 1, wherein the recess (100;200;300;400) is located near the leading edge (82) of the airfoil (78).

3. The blade (64) according to claim 1, wherein the recess (100;200;300;400) is located near the trailing edge (84) of the airfoil (78).

4. The blade (64) according to claim 1, 2 or 3, wherein the recess (100;200;300;400) extends to at least one of the pressure and suction sides (86,88).

5. The blade (64) according to claim 1, 2 or 3, wherein the recess (100;200;300;400) is arranged inward of the pressure and suction sides (86,88).

6. The blade (64) according to any of claims 1 to 4, wherein the recess (100;200;300;400) extends to at least one of the leading and trailing edges (82,84).

7. The blade (64) according to any preceding claim, wherein the depth (104) is between 0.127 to 0.381 mm (5 to 15 mils).

8. The blade (64) according to any preceding claim, wherein the airfoil (78) includes a cooling passage (90), the recess (100;200;300;400) in non-communication with and fluidly isolated from the cooling passage (90).

9. The blade (64) according to any preceding claim, wherein the terminal end surface (102) includes multiple recesses (100;200;300;400).

10. A gas turbine engine (20) comprising compressor and turbine sections (24,28), one of the compressor and turbine sections (24,28) including a blade outer air seal (118) and the blade of any preceding claim.

11. A blade (64) for a gas turbine engine (20) comprising:
an airfoil (78) having a tip (80;180;280;380) with a terminal end surface (102), the airfoil (78) includes pressure and suction sides (86,88) joined at leading and trailing edges (82,84), the pressure and suction sides (86,88) terminating at the terminal end surface (102), the terminal end surface (102) includes a recess (100;200;300;400) arranged radially inward of the terminal end surface having a depth (104) of less than 1.016 mm (40 mils), the recess (100;200;300;400) being without any cooling holes, the terminal end surface (102) having an edge (108) formed between the recess and the terminal end surface;
**characterised in that** the recess (100;200;300;400) is completely filled with a thermal barrier coating (106);
and **in that** the thermal barrier coating forms a planar surface which extends beyond the edge (108) and coats at least a portion of the terminal end surface (102).

## Patentansprüche

1. Schaufel (64) für einen Gasturbinenmotor (20), Folgendes umfassend:
ein Schaufelprofil (78), das eine Spitze (80; 180; 280; 380) mit einer Anschlussendfläche (102) aufweist, wobei das Schaufelprofil (78) eine Druckseite (86) und eine Saugseite (88) beinhaltet, die an einer Vorderkante (82) und einer Hinterkante (84) verbunden sind, wobei die Druckseite (86) und die Saugseite (88) an der Anschlussendfläche (102) enden, wobei die Anschlussendfläche (102) eine Aussparung (100; 200; 300; 400) beinhaltet, die von der Anschlussendfläche radial nach innen angeordnet ist und eine Tiefe (104) von weniger als 1,016 mm (40 mil) aufweist und die Aussparung (100; 200; 300; 400) keine Kühlöffnungen hat;
**dadurch gekennzeichnet, dass** die Aussparung (100; 200; 300; 400) vollständig mit einer Wärmedämmschicht (106) ausgefüllt ist; und
dadurch, dass die Wärmedämmschicht (106) eine ebene Fläche bildet, die bündig mit der Abschlussendfläche (102) ist.

2. Schaufel (64) nach Anspruch 1, wobei sich die Aussparung (100; 200; 300; 400) nahe der Vorderkante (82) des Schaufelprofils (78) befindet.

3. Schaufel (64) nach Anspruch 1, wobei sich die Aussparung (100; 200; 300; 400) nahe der Hinterkante (84) des Schaufelprofils (78) befindet.

4. Schaufel (64) nach Anspruch 1, 2 oder 3, wobei sich die Aussparung (100; 200; 300; 400) mindestens bis zu einer von der Druckseite (86) und der Saugseite (88) erstreckt.

5. Schaufel (64) nach Anspruch 1, 2 oder 3, wobei sich die Aussparung (100; 200; 300; 400) innerhalb der Druckseite (86) und der Saugseite (88) erstreckt.

6. Schaufel (64) nach einem der Ansprüche 1 bis 4, wobei sich die Aussparung (100; 200; 300; 400) mindestens bis zu einer von der Vorderkante (82) und der Hinterkante (84) erstreckt.

7. Schaufel (64) nach einem der vorhergehenden Ansprüche, wobei die Tiefe (104) zwischen 0,127 mm und 0,381 mm (5 mil bis 15 mil) beträgt.

8. Schaufel (64) nach einem der vorhergehenden Ansprüche, wobei das Schaufelprofil (78) einen Kühlkanal (90) beinhaltet, wobei die Aussparung (100; 200; 300; 400) nicht mit dem Kühlkanal (90) kommuniziert und von diesem fluidisch isoliert ist.

9. Schaufel (64) nach einem der vorhergehenden Ansprüche, wobei die Anschlussendfläche (102) mehrere Aussparungen (100; 200; 300; 400) beinhaltet.

10. Gasturbinenmotor (20), einen Kompressorabschnitt (24) und einen Turbinenabschnitt (28) umfassend, wobei einer von dem Kompressorabschnitt (24) und dem Turbinenabschnitt (28) eine äußere Schaufelluftdichtung (118) und die Schaufel nach einem der vorhergehenden Ansprüche beinhaltet.

11. Schaufel (64) für einen Gasturbinenmotor (20), Folgendes umfassend:
ein Schaufelprofil (78), das eine Spitze (80; 180; 280; 380) mit einer Anschlussendfläche (102) aufweist, wobei das Schaufelprofil (78) eine Druckseite (86) und eine Saugseite (88) beinhaltet, die an einer Vorderkante (82) und einer Hinterkante (84) verbunden sind, wobei die Druckseite (86) und die Saugseite (88) an der Anschlussendfläche (102) enden, wobei die Anschlussendfläche (102) eine Aussparung (100; 200; 300; 400) beinhaltet, die von der Anschlussendfläche radial nach innen angeordnet ist und eine Tiefe (104) von weniger als 1,016 mm (40 mil) aufweist und die Aussparung (100; 200; 300; 400) keine Kühlöffnungen hat, wobei die Anschlussendfläche (102) eine Kante (108) aufweist, die zwischen der Aussparung und der Anschlussendfläche gebildet wird;
**dadurch gekennzeichnet, dass** die Aussparung (100; 200; 300; 400) vollständig mit einer Wärmedämmschicht (106) ausgefüllt ist; und
dadurch, dass die Wärmedämmschicht eine ebene Fläche bildet, die sich über die Kante (108) erstreckt und mindestens einen Teil der Anschlussendfläche (102) beschichtet.

## Revendications

1. Aube (64) pour un moteur à turbine à gaz (20) comprenant :
un profil aérodynamique (78) ayant une pointe (80 ; 180 ; 280 ; 380) avec une surface d'extrémité terminale (102), le profil aérodynamique (78) comporte des côtés intrados et extrados (86, 88) reliés au niveau des bords d'attaque et de fuite (82, 84), les côtés intrados et extrados (86, 88) se terminant à la surface d'extrémité terminale (102), la surface d'extrémité terminale (102) comporte un évidement (100 ; 200 ; 300 ; 400) disposé radialement à l'intérieur de la surface d'extrémité terminale ayant une profondeur (104) inférieure à 1,016 mm (40 millièmes de pouce), l'évidement (100 ; 200 ; 300 ; 400) étant sans trous de refroidissement ;
**caractérisée en ce que** l'évidement (100 ; 200 ; 300 ; 400) est complètement rempli d'un revêtement de barrière thermique (106) ; et
**en ce que** le revêtement de barrière thermique (106) forme une surface plane qui affleure avec la surface d'extrémité terminale (102) .

2. Aube (64) selon la revendication 1, dans laquelle l'évidement (100 ; 200 ; 300 ; 400) est situé près du bord d'attaque (82) du profil aérodynamique (78).

3. Aube (64) selon la revendication 1, dans laquelle l'évidement (100 ; 200 ; 300 ; 400) est situé près du bord de fuite (84) du profil aérodynamique (78).

4. Aube (64) selon la revendication 1, 2 ou 3, dans laquelle l'évidement (100 ; 200 ; 300 ; 400) s'étend jusqu'à au moins l'un des côtés intrados et extrados (86, 88).

5. Aube (64) selon la revendication 1, 2 ou 3, dans laquelle l'évidement (100 ; 200 ; 300 ; 400) est disposé à l'intérieur des côtés intrados et extrados (86, 88).

6. Aube (64) selon l'une quelconque des revendications 1 à 4, dans laquelle l'évidement (100 ; 200 ; 300 ; 400) s'étend jusqu'à au moins l'un des bords d'attaque et de fuite (82, 84).

7. Aube (64) selon une quelconque revendication précédente, dans laquelle la profondeur (104) est comprise entre 0,127 et 0,381 mm (5 à 15 millièmes de pouce).

8. Aube (64) selon une quelconque revendication précédente, dans laquelle le profil aérodynamique (78) comporte un passage de refroidissement (90), l'évidement (100 ; 200 ; 300 ; 400) en non communication avec et isolé de manière fluidique du passage de refroidissement (90).

9. Aube (64) selon une quelconque revendication précédente, dans laquelle la surface d'extrémité terminale (102) comporte de multiples évidements (100 ; 200 ; 300 ; 400).

10. Moteur à turbine à gaz (20) comprenant des sections de compresseur et de turbine (24, 28), l'une des sections de compresseur et de turbine (24, 28) comportant un joint d'étanchéité à l'air extérieur d'aube (118) et l'aube selon une quelconque revendication précédente.

11. Aube (64) pour un moteur à turbine à gaz (20) comprenant :
un profil aérodynamique (78) ayant une pointe (80 ; 180 ; 280 ; 380) avec une surface d'extrémité terminale (102), le profil aérodynamique (78) comporte des côtés intrados et extrados (86, 88) reliés au niveau des bords d'attaque et de fuite (82, 84), les côtés intrados et extrados (86, 88) se terminant à la surface d'extrémité terminale (102), la surface d'extrémité terminale (102) comporte un évidement (100 ; 200 ; 300 ; 400) disposé radialement à l'intérieur de la surface d'extrémité terminale ayant une profondeur (104) inférieure à 1,016 mm (40 millièmes de pouce), l'évidement (100 ; 200 ; 300 ; 400) étant sans trous de refroidissement, la surface d'extrémité terminale (102) ayant un bord (108) formé entre l'évidement et la surface d'extrémité terminale ;
**caractérisé en ce que** l'évidement (100 ; 200 ; 300 ; 400) est complètement rempli d'un revêtement de barrière thermique (106) ;
et **en ce que** le revêtement de barrière thermique forme une surface plane qui s'étend au-delà du bord (108) et recouvre au moins une partie de la surface d'extrémité terminale (102).
